Europäisches Patentamt

European Patent Office

Office européen des brevets

(11) Publication number: **0 097 051**
A1

# EUROPEAN PATENT APPLICATION

(21) Application number: **83303405.1**

(22) Date of filing: **13.06.83**

(51) Int. Cl.³: **A 01 G 9/22**, E 06 B 9/262

(30) Priority: **11.06.82 GB 8216961**
**17.12.82 GB 8235924**

(43) Date of publication of application: **28.12.83**
**Bulletin 83/52**

(84) Designated Contracting States: **AT BE CH DE FR GB IT
LI LU NL SE**

(71) Applicant: **MORTIMER TECHNOLOGY LIMITED,
47 Castle Street, Reading Berks (GB)**

(72) Inventor: **Dodson, Christopher, Mortimer Hill Mortimer,
Reading Berkshire (GB)**
Inventor: **Gamble, Paul, 16 Raven Road, Hook
Hampshire (GB)**

(74) Representative: **Wright, Peter David John et al, R.G.C.
Jenkins & Co. 12-15, Fetter Lane, London EC4A 1PL (GB)**

(54) Screen.

(57) An extendible screen (10) comprises an inflatable struc-
ture (12) which is formed so as to expand in the direction of extension (X) of the screen into an extended screening layer on
being inflated and so as to retract in the opposite direction into
a compacted flattened band on being deflated, and means (14)
permitting fluid communication with the interior of the struc-
ture (12) for permitting inflation and deflation thereof. The
inflatable structure (12) is formed from a plurality of tubular
elements (16) arranged parallel to one another and transversely
of the direction of extension (X) of the screen. The tubular
elements (16) are sealed together and communicate with one
another through openings (30) in their walls. Each tubular
element (16) forms a substantially flat strip when deflated and
expands laterally on inflation.

- 1 -

## SCREEN

This invention concerns an extendible screen for use particularly, but not solely, in a greenhouse.

A significant problem in commercial greenhouses is that the extensive use of glass, or an equivalent material, in the structure of the greenhouse promotes heat loss at night, which may slow down the growth of the plants or even cause them damage. Various proposals have been put forward to counteract this problem, including double glazing at least portions of the greenhouse and installing extendible screens which can be extended into a screening condition at night for insulating purposes.

However, none of these proposals has been found to be entirely satisfactory. The known screening arrangements, in particular, which mostly feature a number of screens mounted to be individually extendible horizontally under the roof of the greenhouse, may occasionally fail to operate effectively and have also tended to be cumbersome to use because the screens cannot readily be extended and retracted from a single remote location.

The present invention provides an especially simple and reliable screen for use, for example, in a greenhouse as an insulating blind, or in a swimmingpool as a cover on the surface of the water.

According to one aspect of the invention, there is provided an extendible screen comprising an inflatable structure which is formed so as to expand in the direction of extension of the screen into an extended screening layer on being inflated and so as to retract in the opposite direction into a compacted flattened band on being deflated, and means permitting fluid communication with the interior of said structure for permitting inflation and deflation thereof.

Because the screen is fully controlled by inflation and deflation, it may easily be remotely operated. Further, the main bulk of the screen is provided by the inflatable structure, which extends or retracts in on itself without the aid of extra mechanical driving or control elements and so an exceptionally lightweight construction is possible.

In a preferred form of the invention, the inflatable structure comprises a plurality of tubular elements extending parallel to one another and transversely of the direction of extension of the screen, the tubular elements being joined together and having openings in their walls permitting fluid communication between them.

It has been discovered that the operation of the screen is significantly improved if the tubular elements are formed and connected in the particular manner described below.

In this preferred version of the screen, each tubular element is designed to form a substantially flat strip when deflated whose edges lie along opposite faces of the screen and to have an elongated cross section in a direction generally perpendicular to the screen when inflated. For example, each tubular element may comprise an opposed pair of flexible walls, which meet one another along edges of the element at an angle whose magnitude therefore varies according to the degree of inflation of the tubular element.

For connecting the tubular elements together, portions of the flexible walls of each element may conveniently be joined, as by welding, to corresponding portions of respective walls of adjacent elements, and the joined portions may contain openings permitting fluid communication between the elements. An important feature in this instance, is that the height of each of the joined portions is preferably at least one quarter, and advantageously approximately one third, of the height of the corresponding flexible wall in the deflated condition of the screen.

The combination of features just mentioned ensures the correct action of the screen during inflation and deflation. And it avoids a problem, which may in some circumstances otherwise occur and which can render the screen quite useless, of collapse of one or more of the tubular elements in the wrong direction, i.e. in the direction perpendicular to the screen, on deflation.

Manufacture of a preferred form of the screen can be achieved quite simply by the method according to a further aspect of the invention.

This method of manufacturing a screen comprises placing first and second sections of flexible web in face-to-face relation, sealing the first and second sections together in a relatively inner elongated sealing region, placing a third section of flexible web in face-to-face relation with one of the first and second sections, sealing the third section to the one section in a relatively outer sealing region located outside the relatively inner sealing region, placing a fourth section of flexible web in face-to-face relation with the third section, sealing the fourth section to the third section in a further relatively inner elongated sealing region, repeating the steps to form a plurality of tubular elements, and forming openings in the relatively inner sealing regions.

The invention is described further, by way of example, with reference to the accompanying drawings in which:

Figure 1 is an exploded fragmentary perspective view of a screen according to the invention in a substantially retracted condition;

Figure 2 is a section through one of the tubular elements of the screen shown in Figure 1, in the flattened form it adopts when the screen is in a substantially retracted condition.

Figure 3 is an exploded fragmentary perspective view of the screen in an extended condition;

Figure 4 is a section through one of the tubular elements in the expanded form which it adopts when the screen is in an extended condition;

Figure 5 is a diagrammatic view of a portion of a greenhouse roof, with parts broken away, incorporating the screen shown in Figures 1 to 4;

Figure 6 is a section along the line 6-6 in Figure 5 through a portion of a double glazing unit of the greenhouse showing the mounting of the screen and showing the screen in the retracted condition;

Figure 7 is a section similar to that of Figure 6 but showing the screen in the extended condition; and

Figures 8(a) to 8(d) illustrate various stages in the manufacture of the screen.

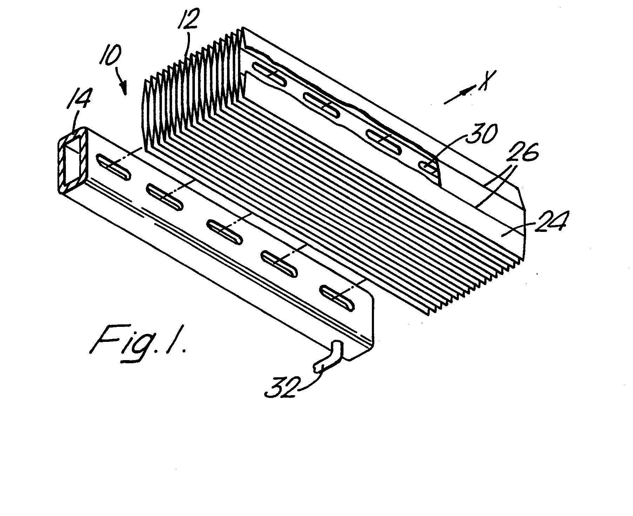

Referring initially to Figures 1 to 4, these show a screen 10 embodying the invention, comprising an

- 7 -

inflatable structure 12 which is extendible in the direction of the arrow X by inflation and retractable in the opposite direction by deflation. For the purposes of inflating and deflating the structure 12, there is a header 14 connected to the structure 12.

More particularly, the inflatable structure 12 comprises a plurality of tubular elements 16 joined together in parallel relation and in communication with one another. The tubular elements 16 extend transversely of the direction of extension X of the screen 10 and provide communicating fluid pockets 18 which are simultaneously expandible or contractable relative to the direction of extension X of the screen 10 to extend or retract the screen 10.

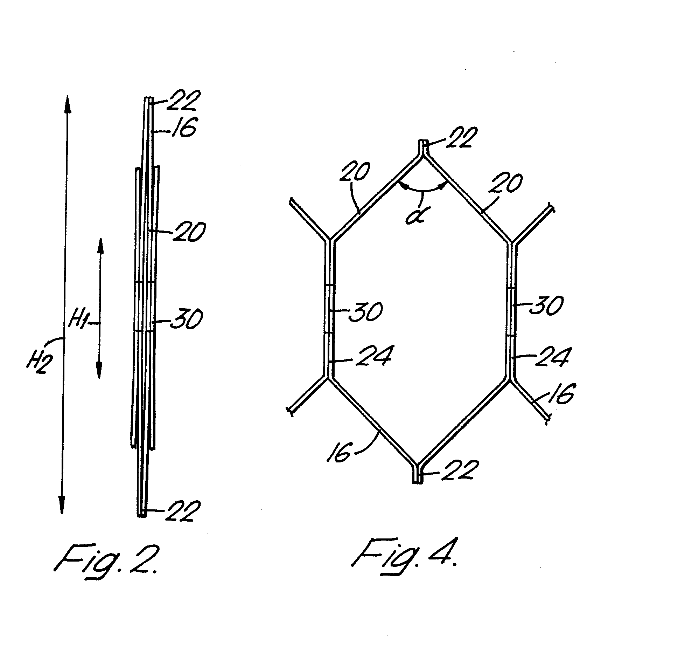

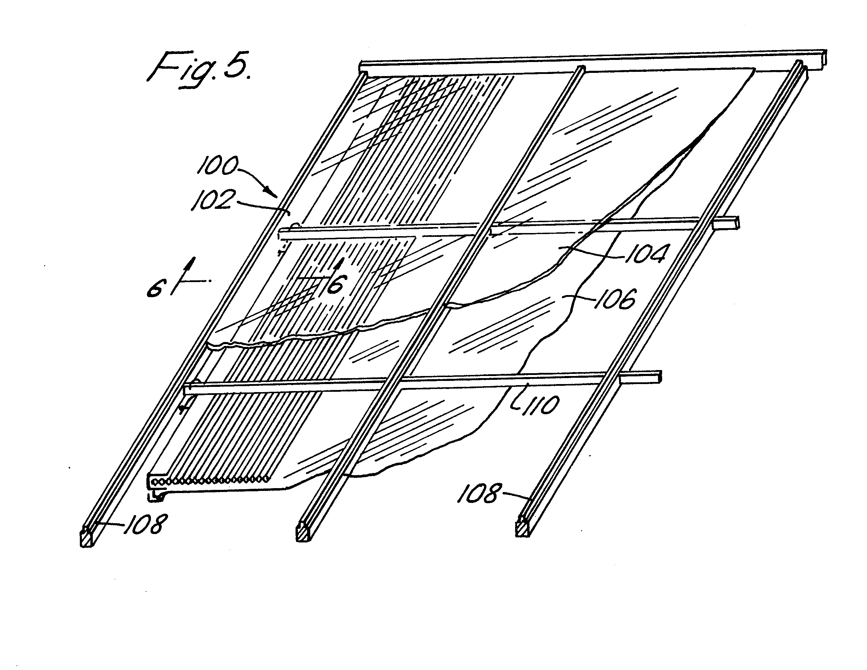

Each tubular element 16 has two flexible side walls 20 which are joined to each other along upper and lower edges 22 and at the ends (not shown) of the tubular element 16. The arrangement is such that the side walls 20 lie substantially flat against one another (see Figure 2) when the structure 12 is deflated and move apart to define an elongated, slightly flattened, cross-section through the tubular element 16 (see Figure 4) when the

- 8 -

structure 12 is inflated. Hence, the inflatable structure 12 retracts on deflation from an extended screening layer into a compacted flattened band.

An important aspect of the invention is that such retraction takes place in a controlled fashion. Two features which contribute to this are the relationship between the side walls 20 of each tubular element 16 in the regions where they meet; and the arrangement of the joins between adjacent tubular elements 16.

As shown in Figures 2 and 4, the two side walls 20 of each tubular element 16 are joined at an angle $\alpha$ along each of the upper and lower edges 22 of the element. The magnitude of the angle $\alpha$ varies according to the degree of expansion of the tubular element 16 and, in some cases the angle may increase up to 90° when the tubular element 16 is fully expanded. Nevertheless, the two walls 20 at all times meet in an angle rather than in a gradual curve so that on contraction of the tubular element 16 they tend to draw towards one another rather than collapsing in the vertical direction of the tubular element 16. The same effect can be achieved if the two walls 20 of each tubular element 16 meet along fold lines instead of sealing lines.

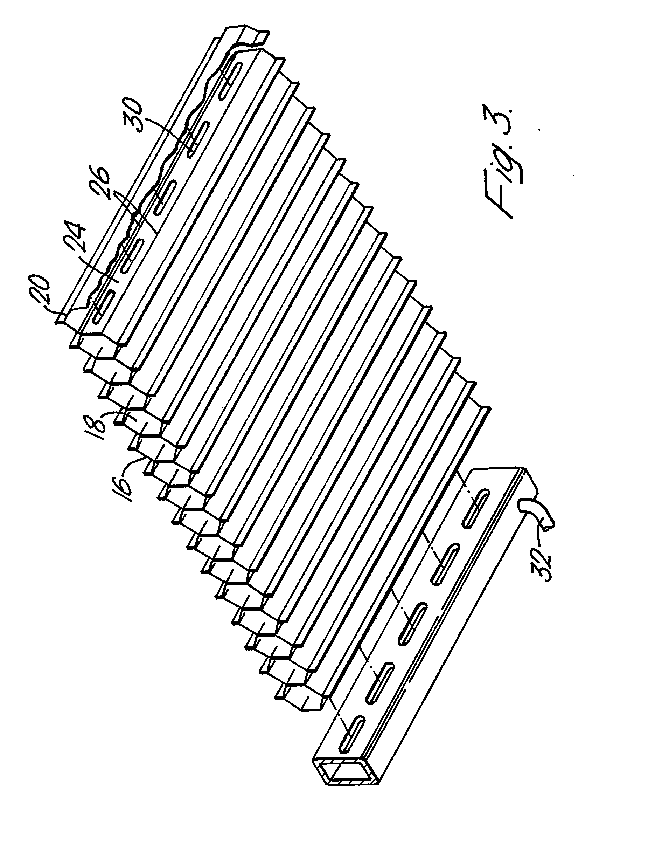

Figures 2 and 4 also show that portions 24 of the side walls 20 of adjacent tubular elements 16 are connected. These portions 24 are joined along sealing lines 26 (shown in Figures 1 and 3), each of which forms a closed contour bounding the portions 24 and located parallel to but inwardly of the edges 22 of the walls 20. Openings 30 are provided in the portions 24 to communicate the tubular elements 16 one with another and, in this instance, the openings 30 are in the form of slots extending axially of the tubular elements 16. To ensure that the tubular elements 16 contract laterally on deflation and do not collapse in the vertical direction, each portion 24 must constitute a substantial proportion of the associated wall 20 in the vertical direction. In particular, it is desirable for the height $H_1$ of each portion 24 to be at least one quarter of the height $H_2$ of the wall 20, with the tubular element in its flattened form. On the other hand, the greater the height $H_1$ of each portion 24 in relation to the height $H_2$ of the respective wall 20, the smaller the distance that the screen can extend overall when inflated. Preferably, therefore, the height $H_1$ of each portion 24 is approximately one third of the height $H_2$ of the wall 20, when the associated tubular element 16 is deflated.

Although in the embodiment of the screen described above, a single continuous sealing line 26 encircles each connecting portion 24 and all the openings 30 provided in that portion, it will be appreciated that instead adjacent connecting portions may be joined by sealing lines, each extending around a single one or a few of the openings 30. The preferred heights for the connecting portions still remains the same.

Of course, the outermost wall at the front edge of the inflatable structure 12 contains no openings. However, the wall 20 at the opposite edge of the structure 12 is attached to the header 14 in the same manner as if this were another tubular element 16. The header 14 contains openings 30 accordingly.

Referring to Figures 1 and 3, it can be seen that a supply pipe 32 is connected to the header 14. For inflating the screen 10, air is supplied to the header 14 by way of the pipe 32. The air is supplied into the tubular elements 16 by way of the openings 30 in the header 14 and the openings 30 in the connecting portions 24 of the elements 16. The inflatable structure 12 therefore expands in the direction of the arrow X into its extended screening layer. To deflate the screen 10, air is withdrawn from the structure 12 through the header 14 and the pipe 32. By virtue of the features described above, the screen 10 retracts, in a controlled manner without collapse, into its compacted flattened band.

Materials from which the inflatable structure 12 may be formed are EVA, PVC, polythene or the materials sold under the trade names MELINEX and TEDLAR. In the case of polythene at least, the thickness of the material, and hence of the walls 20 of the tubular elements, is preferably approximately 0.1 mm. or greater, and the dimensions of the tubular elements are selected such that their heights when deflated are in the range from 50 mm. to 150 mm.

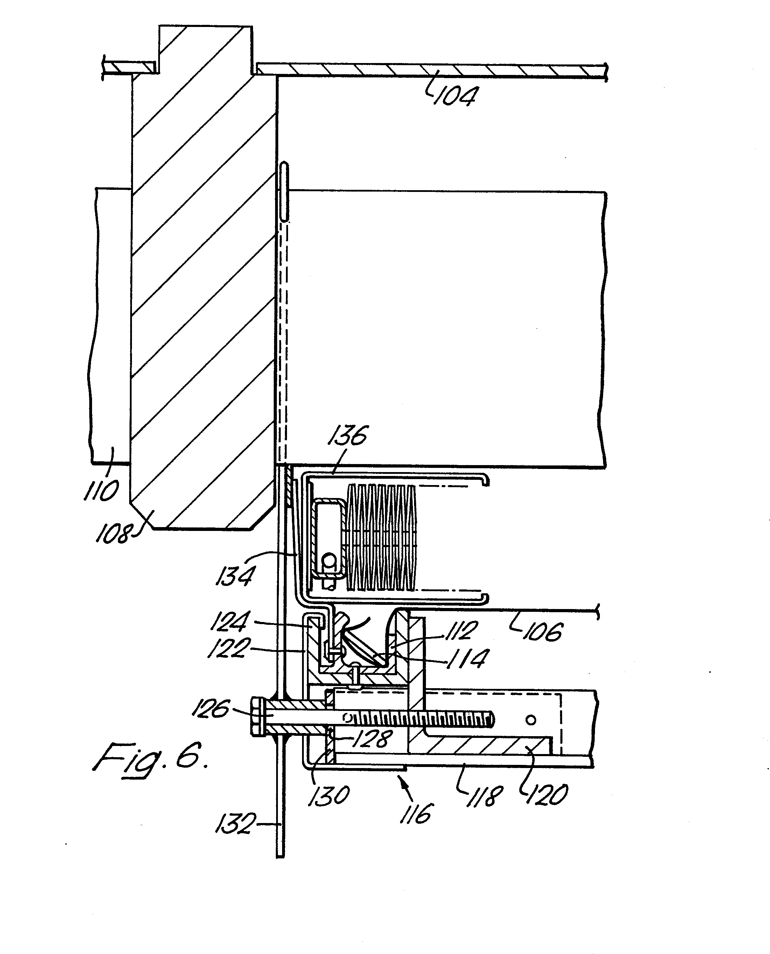

One application of the screen 10 is in a greenhouse as shown in Figures 5 to 7.

The greenhouse has a ridged roof 100 and the screen 10 is arranged to lie along the roof 100. In practice, the roof is formed from a plurality of double glazing units 102, each sloping upwardly from the foot to the ridge of the roof 100, and a respective screen 10 is mounted within each unit 102, between the outer skin 104 and the inner skin 106. Each such screen 10 is attached to one side of the associated unit 102 and can be selectively extended towards and retracted away from the other side by appropriate supply and withdrawal of air from its header 14. The supply pipes 32 to the respective headers 14 are connected to a common control location (not shown) remote from the screens. And a control switch at the control location permits the screens to be extended or retracted in unison.

Since the mountings of all the screens 10 within their double glazing units 102 is the same, only one will be described.

The double glazing unit 102 has a glass outer skin 104 and a synthetic plastics inner skin 106, which extend between parallel frame members 108.

The frame members 108 and the outer skin 104 form part of the original greenhouse structure. The inner skin 106 is an additional feature installed subsequently. Both the skins 104 and 106 may be attached to the frame members 108. However, in this instance, the skin 106 is mounted on purlins 110 of the greenhouse as described below.

The glazing arrangement providing the inner skin 106 comprises a pair of channel struts 112 which are mounted beside the frame members 108 and between which a sheet of flexible plastics material providing the inner skin 106 is attached. For this purpose, the side edges of the sheet are wrapped around wedging bars 114 arranged to wedge within the recesses in the struts 112, which are shaped accordingly. The struts 112 are mounted by way of tensioning devices 116 on bracing bars 118. Each tensioning device 116 includes a pair of angled supports 120, 122 bearing between them a channel member 124 carrying the associated strut 112. The angled support 120 slidably engages the associated bracing bar 118, and a bolt 126 passing freely through an enlarged opening 128 in an end plate 130 of the bracing bar 118 and threaded into the angled support 120 serves, when

- 14 -

turned, to move the support 120 and hence the channel member 124 and strut 112 relative to the bracing bar 118 for tensioning purposes.  The angled support 122 engages over a side of the channel member 124 and the end of the bracing bar 118 to guide the member 124 relative to the bar 118 during tensioning.  Each bolt 126 is supported by a respective hook 132 and this engages over one of the purlins 110 to hold the inner glazing skin 106 in position.

Also carried by one of the struts 112 is the screen 10.  A dog-leg   support 134 mounted on one side of the strut 112 carries a channel member 136.  The channel member 136 is disposed between the inner skin 106 and the purlins 110 and opens towards the opposite side of the glazing unit 102.  The header 14 of the screen 10 is mounted on the base plate of the channel member 136 so that the inflatable structure 12 is positioned to extend through the open edge of the channel member 136.

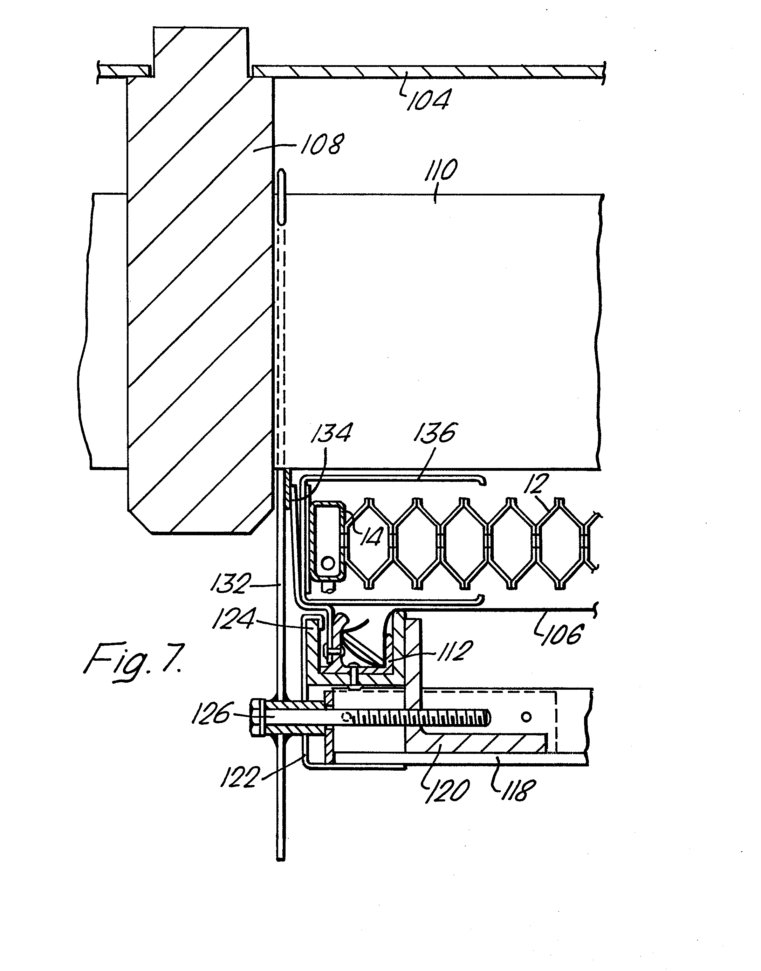

As shown in Figure 6, when the inflatable structure 12 is deflated and the screen 10 is retracted, it is housed entirely within the channel member 136.  On being extended, the screen 10 emerges from the channel member 136 towards the opposite side of the glazing unit 102 as illustrated in Figure 7.

Although, in the greenhouse, each screen 10 has been described as being mounted inside a respective double glazing unit 102 and as being arranged to move from one side of the unit to the other, this is not essential. Instead, each screen 10 may be positioned under the glazing of the roof without being enclosed in a double glazing unit. That is, it may be situated under the glass if the roof is single glazed, or below the second glazing skin if the roof is double glazed. The screens 10 may also be arranged to move up and down along the roof rather than sideways across it on inflation and deflation. Alternatively, the screens 10 may be mounted for horizontal movement beneath the roof.

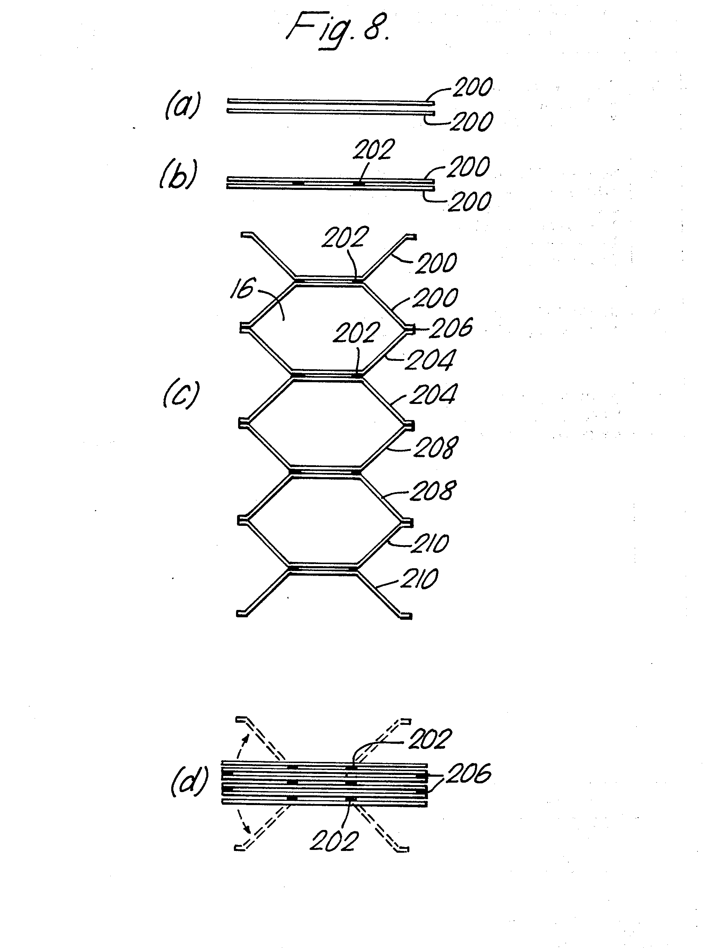

Turning now to Figure 8, a possible method of manufacturing the screen 10 will be described.

Initially, two identical flexible strips 200 of webbing are placed together in face-to-face relation as shown in Figure 8(a). A continuous seal 202 is then formed between the two strips, extending parallel to both edges and round both ends. The seal 202 is spaced inwardly from the edges of the strips 200. This step is illustrated in Figure 8(b). Next, the edges of the strips 200 are drawn apart (see Figure 8(c) A further pair of strips 204, joined in the same manner as the strips 200 and also spread apart at their edges, are now aligned with the strips 200 in the manner illustrated in Figure 8(c) and a continuous seal 206 is formed round the edges of the adjacent strips 200, 204.

A first tubular element 16 having its walls 20 defined by a respective strip 200 and a respective strip 204 is thus completed.

To form further tubular elements 16, additional pairs of strips, sealed together in the same fashion as the strips 200, are successively added to the outermost strips using further seals 206. These pairs are designated 208 and 210, respectively, in Figure 8c.

The central tubular elements are then collapsed as shown in Figure 8(d). Following this, the edges of the outer most strips must simply be lifted away from the collapsed elements to allow further elements 16 to be formed.

In order to complete the screen, a single further strip is applied to one of the outer most strips and secured by a seal 206. After this, the strips placed close against one another as in Figure 8(d), are formed with openings extending right through the band of strips within the confines of the seals 202. These openings constitute the openings 30 described above. They may be punched or stamped or formed in some other fashion. Finally, the single further strip applied to the band before the openings were formed is sealed to the header 14; and an additional, intact, strip is sealed to the free edges of the outer most strip.

The screen is now complete.

- 18 -

In a possible modification of the method just described, the screen is built up a strip at a time, rather than by adding pairs of strips at each stage.

Also, the strips may be preformed with the openings so that the opening forming step is omitted.

The present screen is of simple construction and can be produced by a simple manufacturing process. It is effective in operation and, although a specific application of the screen in a greenhouse has been described, it may also be employed elsewhere, for example as a cover for a swimmingpool.

- 1 -

CLAIMS:

1. An extendible screen comprising an inflatable structure (12), and means (14) permitting fluid communication with the interior of the inflatable structure (12) for permitting inflation and deflation thereof, characterised in that the inflatable structure (12) is formed so as to expand in the direction of extension (X) of the screen (10) into an extended screening layer on being inflated and so as to retract in the opposite direction into a compacted flattened band on being deflated.

2. A screen as claimed in claim 1, characterised in that the inflatable structure (12) comprises means (16) providing a plurality of elongated fluid pockets (18) extending parallel to one another and transversely of the direction of extension (X) of the screen, said means (16) providing communication between adjacent fluid pockets (18) such that the fluid pockets (18) are simultaneously expandible or contractable relative to the direction of extension (X) of the screen.

3. A screen as claimed in claim 1 or 2, characterised in that the inflatable structure (12) comprises a plurality of intercommunicating tubular elements (16).

4. A screen as claimed in claim 3, characterised in that each tubular element (16) is designed to form a substantially flat strip when deflated.

5. A screen as claimed in claim 3 or 4, characterised in that each tubular element (16) comprises an opposed pair of flexible walls (20) meeting one another at an angle (α) whose magnitude varies according to the degree of inflation of the tubular element (16).

6. A screen as claimed in claim 5, characterised in that portions (24) of the flexible walls (20) of each tubular element (16) are joined to corresponding portions (24) of respective walls (20) of adjacent tubular elements (16), and in which the joining portions (24) contain openings (30) providing communication between the adjacent tubular elements (16).

7. A screen as claimed in claim 6, characterised in that the openings (30) comprise slots orientated generally axially of the tubular elements (16).

8. A screen as claimed in claim 6 or 7, characterised in that the height ($H_1$) of each joining portion (24) is at least one quarter of the height ($H_2$) of the corresponding flexible wall (20) in the deflated condition of the screen (10).

9. A screen as claimed in claim 8, characterised in that the height ($H_1$) of each joining portion (20) is approximately one third of the height ($H_2$) of the corresponding flexible wall (20) in the deflated condition of the screen (10).

10. A screen as claimed in any of claims 5 to 9, characterised in that the height ($H_2$) of the flexible walls (20) of each tubular element (16) is in the range from 50 mm. to 150 mm. in the deflated condition of the screen (10).

11. A screen as claimed in any of claims 5 to 10, in which the thickness of each flexible wall (20) is at least 0.1 mm.

- 4 -

12. A method of manufacturing a screen characterised by placing first and second sections (200) of flexible web in face-to-face relation, sealing the first and second sections (200) together in a relatively inner elongated sealing region (202), placing a third section (204) of flexible web in face-to-face relation with one of the first and second sections (200), sealing the third section (204) to the one section (200) in a relatively outer sealing region (206) located outside the relatively inner sealing region (202), placing a fourth section (204) of flexible web in face-to-face relation with the third section (204), sealing the fourth section (204) to the third section (204) in a further relatively inner elongated sealing region (202), repeating the steps to form a plurality of tubular elements (16), and forming openings (30) in the relatively inner sealing regions (202).

13. A method as claimed in claim 12, characterised by sealing the fourth section (204) on the third section (204) in the further relatively inner sealing region (202) prior to sealing the third section (204) to the one section (200) in the relatively outer sealing region (206).

14.  A double glazing unit characterised by a screen (10) as claimed in any of claims 1 to 11, the screen (10) being arranged between the two glazing skins (104,106) of the unit (102).

15.  A greenhouse characterised by a screen (10) as claimed in any of claims 1 to 11, the screen (10) being mounted so that it is in the extended condition it lies along and is oriented substantially in a plane parallel with the roof (100) of the greenhouse.

Fig.1.

Fig.2.

Fig.4.

Fig. 3

*Fig.5.*

Fig.6.

Fig. 7.

Fig. 8.

(a) — 200
— 200

(b) 202 — 200
— 200

(c) 202 — 200
16 — 200
202 — 206
— 204
— 204
— 208
— 208
— 210
— 210

(d) — 202
— 206
202

European Patent
Office

**EUROPEAN SEARCH REPORT**

Application number

EP 83 30 3405

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 095 639 (D.F. RYAN) * Column 1, lines 31-61; column 3, lines 23-45; figures 1, 2 * | 1-5,15 | A 01 G 9/22 E 06 B 9/262 |
| X | WO-A-8 102 659 (X.S. SMITH INC.) * Claims 1, 6, 12, 16; page 2, lines 9-30; page 5, line 1 - page 7, line 11; page 11, line 29 - page 12, line 26; figures 1, 2, 6 * | 1-4,6, 15 | |
| A | DE-A-2 840 023 (H. KÖSTER) * Page 4, lines 1-13; figures 1-3 * | 4,6,12 | |
| A | DE-U-7 513 576 (M.O.H. RASMUSSEN) * Page 4, line 2 - page 6, line 6; figures 1, 3 * | 4,6,12 ,15 | |

TECHNICAL FIELDS
SEARCHED (Int. Cl. ³)

A 01 G 9/22
E 06 B 9/26

The present search report has been drawn up for all claims

| Place of search BERLIN | Date of completion of the search 18-08-1983 | Examiner BERGZOLL M C |
|---|---|---|